# EUROPÄISCHE PATENTSCHRIFT

(11) **EP 4 384 676 B1**
(45) Veröffentlichungstag und Bekanntmachung des Hinweises auf die Patenterteilung: **15.04.2026**
(21) Anmeldenummer: 22783461.1
(22) Anmeldetag: 12.09.2022
(51) Int. Cl.: F04B 49/06, E04G 21/04, F04B 1/02, F04B 15/02

(54) **NACHSTÜTZÜBERWACHUNG FÜR EIN DICKSTOFFFÖRDERSYSTEM**
BOLSTER MONITORING FOR A THICK MATTER CONVEYING SYSTEM
SURVEILLANCE DE TRAVERSE POUR UN SYSTÈME DE TRANSPORT DE MATIÈRE ÉPAISSE

(30) Priorität: 28.09.2021 DE 102021125042
(43) Veröffentlichungstag der Anmeldung: 19.06.2024
(73) Patentinhaber: Putzmeister Engineering GmbH, 72631 Aichtal (DE)
(72) Erfinder: MÜLLER, Ansgar, 72631 Aichtal (DE); ODUKWE, Dennis, 72631 Aichtal (DE)
(74) Vertreter: Witte, Weller und Partner Patentanwälte mbB Stuttgart
(86) Internationale Anmeldenummer: PCT/EP2022/075276
(87) Internationale Veröffentlichungsnummer: WO 2023/052113

(56) Entgegenhaltungen:
- EP-A1- 3 670 425
- EP-B1- 1 849 931
- US-A1- 2021 009 388
- US-B2- 7 012 540

## Beschreibung

Die vorliegende Erfindung betrifft unter anderem ein Dickstofffördersystem mit einer Dickstoffpumpe, einem Dickstoffverteilermast, einer Empfangseinheit, einer Verarbeitungseinheit und einer Steuereinheit.

Im praktischen Betrieb eines Dickstofffördersystems können Situationen entstehen, bei denen die Standsicherheit eines zuvor standsicher aufgestellten Dickstofffördersystems reduziert oder sogar verloren wird. Dies kann insbesondere durch externe Faktoren verursacht sein, wie zum Beispiel durch Bewegungen des Untergrundes, auf dem das Dickstofffördersystem aufgestellt ist, oder durch eine Änderung der für das Dickstofffördersystem zur Verfügung stehenden maximalen Aufstandsfläche während des Betriebs, und diese sich zum Beispiel verringert. Aber auch aufgrund von internen Faktoren kann die Standsicherheit nicht mehr hinreichend gegeben sein. Zum Beispiel kann ein Dickstofffördersystem für eine spezifische Betriebsart, bei der der Dickstoffverteilermast nicht maximal, sondern nur in begrenztem Umfang ausgelenkt wird, standsicher aufgestellt sein. Soll aus diesem Zustand heraus jedoch noch eine weitere Betriebsart oberhalb des begrenzten Auslenkungsumfangs stattfinden, so muss die Standsicherheit auch für diese weitere Betriebsart gewährleistet bleiben bzw. erst hergestellt werden.

In diesen Fällen wird üblicherweise entweder die Neigung des Unterbaus des Dickstofffördersystems durch vertikale Positionsänderung zumindest eines Stützbeins des Dickstofffördersystems angepasst oder die Aufstandsfläche durch horizontale Positionsänderung zumindest eines Stützbeins verändert. Üblicherweise umfasst eine horizontale Positionsänderung zumindest eine vertikale Positionsänderung, bei der das Stützbein entlastet wird, sodass es nicht mehr zur Aufstandsfläche beiträgt. Beide Vorgehensweisen umfassen die Betätigung zumindest eines Stützbeins, sodass sie auch unter dem Sammelbegriff "Nachstützen" zusammengefasst werden.

Üblicherweise betätigt der Benutzer zum Nachstützen die Stützbeinhydraulik mit Hebeln, die direkt auf die Hydraulikventile wirken, und ändert auf diese Weise manuell die vertikale und/oder horizontale Stützbeinposition. Problematisch ist, dass die Standsicherheit des Dickstofffördersystems durch das Nachstützen, insbesondere während des Nachstützvorgangs, erheblich reduziert und sogar verloren werden kann, sodass die Gefahr des Umkippens des Dickstofffördersystems besteht. Ob ein Nachstützen in einem aktuellen Betrieb eines Dickstofffördersystems durchführbar ist, kann der Benutzer nur anhand seiner individuellen Erfahrung einschätzen. Daher kann bei üblichen Systemen ein solches Nachstützen nur stufenweise und in kleinsten Schritten erfolgen, wobei der Benutzer den Status der Standsicherheit des Dickstofffördersystems nach jedem Schritt neu bewerten muss. Aufgrund der dazu erforderlichen Einbeziehung des Benutzers kann dabei auf dynamische Änderungen der Standsicherheit gegebenenfalls nicht rechtzeitig reagiert werden. Darüber hinaus kann im Falle einer Fehleinschätzung keine Standsicherheit mehr vorliegen, sodass das Dickstofffördersystem umzukippen droht.

Das Dokument US 7 012 540 B2 ist auf eine Stabilitätskontrolle für eine Autobetonpumpe mit Fahrgestell und Mastanordnung gerichtet, bei der die auf die Stützfüße wirkende Stützlast betrachtet wird. Mittels geeigneter Sensorik und entsprechend eingerichteter Elektronik kann das Überschreiten eines Schwellenwerts durch eine gemessene Stützlast bestimmt und ggf. eine Notabschaltung veranlasst werden.

In dem Dokument EP 1 849 931 B1 ist ein Dickstofffördersystem beschrieben, bei dem der Betrieb von einzelnen Komponenten bei Erreichen vorgegebener kritischer Zustände beeinflusst wird. Dazu ist insbesondere vorgesehen, dass ein zulässiger Arbeitsbereich des Masts oder des Systems insgesamt bestimmt wird.

Das Dokument EP 3 670 425 A1 betrifft die Überwachung der Aufstellung von Stützbeinen eines Autokrans. Dabei soll unter Berücksichtigung einer stützlastabhängigen Fluidkommunikation zwischen zwei Kammern des Stützbeins bestimmt werden, ob das Stützbein in vertikaler Richtung standsicher und belastbar auf einem Untergrund abgestellt worden ist.

Das Dokument US 2021/0009388 A1 schlägt eine Überwachung der Stützbeinposition bei der Ermittlung von Grundbruch vor.

Eine Aufgabe der vorliegenden Erfindung ist es deshalb, vor dem Hintergrund der voranstehend genannten Probleme ein verbessertes Dickstofffördersystem und ein verbessertes Verfahren zum Betreiben eines Dickstofffördersystems bereitzustellen.

Die erfindungsmäße Lösung liegt in den Merkmalen der unabhängigen Ansprüche. Vorteilhafte Weiterbildungen sind Gegenstand der abhängigen Ansprüche.

Gemäß der Erfindung wird ein Dickstofffördersystem offenbart, mit einer Dickstoffpumpe zum Fördern eines Dickstoffs, einem Dickstoffverteilermast zum Verteilen des zu fördernden Dickstoffs, wobei der Dickstoffverteilermast eine zumindest zwei Mastarme umfassende Mastanordnung aufweist, einem Unterbau, an dem der Dickstoffverteilermast und die Dickstoffpumpe angeordnet sind, wobei der Unterbau ein Stützwerk zur Abstützung des Unterbaus mit zumindest einem horizontal und/oder vertikal verfahrbaren Stützbein umfasst, wobei das Stützwerk einen Standsicherheitsbereich mit einer Nachstützschwelle und mit einer durch einen maximalen Standsicherheitsparameter definierten Obergrenze aufweist, und wobei das zumindest eine Stützbein nachstützbar ist, einer Empfangseinheit zum Empfangen zumindest einer Betriebsinformation, einer Verarbeitungseinheit zum Bestimmen eines Standsicherheitsparameters des Dickstofffördersystems abhängig von der zumindest einen empfangenen Betriebsinformation, und einer Steuereinheit zum Ausgeben eines ersten Steuersignals, falls der bestimmte Standsicherheitsparameter des Dickstofffördersystems oberhalb der Nachstützschwelle liegt, wobei die Ausgabe des ersten Steuersignals ein Nachstützen des zumindest einen Stützbeins unterbindet.

Das erfindungsgemäße Dickstofffördersystem ist beispielsweise eine Autobetonpumpe.

Bei der Erfindung handelt es sich um eine besonders vorteilhafte Ausgestaltung eines Dickstofffördersystems mit einer dynamischen und situationsabhängigen Überwachung, ob die Standsicherheit des Dickstofffördersystems für die Durchführung eines Nachstützvorgangs besteht. Ein Nachstützen soll dann möglich sein, wenn eine ausreichende Standsicherheit des Dickstofffördersystems auch während des Nachstützvorgangs gewährleistet bleibt, weshalb die Überwachung vorteilhafterweise auf Basis der Bestimmung eines entsprechenden Standsicherheitsparameters geschieht. Eine generelle Beschränkung, zum Beispiel im Sinne einer maximalen Anzahl von Nachstützvorgängen, ist nicht erforderlich. Wird ein solcher Standsicherheitsparameter bestimmt, der oberhalb einer Nachstützschwelle liegt, so reicht die vorhandene Standsicherheit des Dickstofffördersystems nicht für ein Nachstützen aus, zum Beispiel weil die Durchführung einer horizontalen Positionsänderung eines Stützbeins die Aufstandsfläche zu negativ beeinflussen, sprich verkleinern, würde. Entsprechend ist für diesen Fall vorgesehen, dass ein Nachstützen unterbunden wird. So kann die Überwachung unabhängig vom Benutzer und dessen individueller Erfahrung zuverlässig durchgeführt werden.

Auf diese Weise kann zum einen das Risiko eines Umkippens des Dickstofffördersystems und damit einhergehender Beschädigungen wirkungsvoll verringert werden. Zum anderen wird dem Dickstofffördersystem aber auch ermöglicht, sein volles Potential für mögliche Nachstützvorgänge hinsichtlich ihrer Qualität und Quantität bedarfsgerecht auszuschöpfen. Die verfügbare Reichweite des Dickstofffördersystems kann so effektiv maximiert werden, ohne dass zusätzliche Komponenten oder Ergänzungsbauteile für das Dickstofffördersystem erforderlich sind.

Nachfolgend seien zunächst einige Begriffe erläutert:
Dickstoff ist ein Oberbegriff für schwer förderbare Medien. Bei dem Dickstoff kann es sich beispielsweise um einen Stoff mit grobkörnigen Bestandteilen, einen Stoff mit aggressiven Bestandteilen oder Ähnliches handeln. Der Dickstoff kann auch ein Schüttgut sein. In einer Ausführungsform ist der Dickstoff Frischbeton. Frischbeton kann Körner bis zu einer Größe von mehr als 30 mm enthalten, bindet ab, bildet Ablagerungen in Toträumen und ist aus diesen Gründen schwierig zu fördern. Beispielhafte Dickstoffe sind Beton mit einer Dichte von 800 kg/m³ bis 2300 kg/m³ oder Schwerbeton mit einer Dichte von mehr als 2300 kg/m³.

Die Dickstoffpumpe kann eine Kernpumpe mit zwei, beispielsweise genau zwei, Förderzylindern umfassen. Es wird dann abwechselnd vom ersten auf den zweiten Förderzylinder und vom zweiten auf den ersten Förderzylinder umgeschaltet. Zwischen den Förderzylindern kann ein S-Rohr zyklisch umgeschaltet werden. Ferner kann ein Zusatzzylinder so eingerichtet sein, dass er jeden der Übergänge überbrückt.

Die Mastanordnung umfasst zumindest zwei Mastarme, kann aber auch drei, vier oder fünf Mastarme umfassen. Typischerweise umfasst die Mastanordnung drei bis sieben Mastarme. Ein Mastarm kann dabei an seinem proximalen Ende mit einem Drehwerk des Dickstofffördersystems und an seinem distalen Ende an dem proximalen Ende eines benachbarten Mastarms verbunden sein. Der oder die weiteren Mastarme sind aneinandergereiht, und jeweils an ihrem proximalen Ende mit einem distalen Ende des benachbarten Mastarms verbunden. Das distale Ende des letztgereihten Mastarms, der zudem keine weitere Verbindung an seinem distalen Ende aufweist, definiert dabei einen möglichen Lastanhängepunkt.

Die Mastarme sind dabei jeweils über ein Mastgelenk so miteinander verbunden, dass sie zumindest, zum Beispiel ausschließlich, in einer Dimension zumindest unabhängig von den übrigen Mastarmen bewegbar sind. Jedem Mastarm ist dabei das Mastgelenk an seinem proximalen Ende zugeordnet.

Die Verbindung des einen Mastarms mit dem Drehwerk kann so ausgestaltet sein, dass bei einer Drehung des Drehwerks um eine Achse auch dieser Mastarm oder sämtliche Mastarme um diese Achse gedreht werden. Beispielsweise ist der Mastarm so an dem Drehwerk befestigt, dass er, zum Beispiel ausschließlich, in vertikaler Richtung unabhängig vom Drehwerk bewegt und beispielsweise über sein Mastgelenk rotiert werden kann. Denkbar ist auch, dass ein Mastarm eine Teleskopfunktionalität aufweist und entlang seiner Längsachse teleskopartig und stufenlos verlänger- oder verkürzbar ist. Ein Mastarm ist zum Beispiel so verstellbar, dass zumindest das distale Ende des Mastarms zumindest in eine der drei Raumrichtungen (x-, y- und z-Richtung) bewegbar ist.

Alternativ oder zusätzlich kann ein Mastarm um seine Längsachse rotierbar sein. Beispielsweise umfasst ein Mastarm zumindest einen Aktuator für sein Mastgelenk, wie zum Beispiel einen Hydraulik-, oder Pneumatikzylinder oder einen elektromechanischer Aktuator oder eine Kombination mehrerer, auch unterschiedlicher Typen von Aktuatoren, mit dem er seine Lage gegenüber zumindest einem anderen Mastarm, insbesondere dem am proximalen Ende verbundenen Mastarm, verändern kann. Die Aktuatoren können zum Beispiel dazu eingerichtet sein, den Mastarm um eine horizontale Achse, die zum Beispiel durch sein Mastarmgelenk verläuft, rotatorisch zu verschwenken und/oder in eine, in zwei oder in alle Raumrichtungen translatorisch zu bewegen.

Alternativ oder zusätzlich kann der Mastarm weitere Aktuatoren aufweisen, mittels derer er, zum Beispiel teleskopartig, verlängert oder verkürzt oder rotiert werden kann.

Bei dem Unterbau handelt es sich um ein Grundgerüst, zum Beispiel ein Fahrgestell, an dem der Dickstoffverteilermast und die Dickstoffpumpe angeordnet sind. Beispielsweise sind Dickstoffverteilermast und/oder Dickstoffpumpe an dem Unterbau befestigt. Der Unterbau kann stationär, zum Beispiel als Plattform) oder mobil (zum Beispiel als Fahrzeug) ausgebildet sein. Durch die Anordnung von Dickstoffverteilermast und Dickstoffpumpe an dem Unterbau kann das gesamte Dickstofffördersystem besonders kompakt als eine Einheit, und beispielweise in Form einer Autobetonpumpe ausgebildet sein.

Das Dickstofffördersystem umfasst Mittel zur Ausführung oder Steuerung des erfindungsgemäßen Verfahrens. Diese Mittel umfassen insbesondere die Empfangseinheit, die Verarbeitungseinheit und die Steuereinheit, und können als jeweils separate oder in verschiedenen Kombinationen zusammengefasste Hardware- und/oder Software-Komponenten ausgebildet sein. Die Mittel umfassen beispielsweise mindestens einen Speicher mit Programmanweisungen eines Computerprogramms und mindestens einen Prozessor, ausgebildet zum Ausführen von Programmanweisungen aus dem mindestens einen Speicher.

Die Empfangseinheit von Dickstoffverteilermast, Dickstoffpumpe und Dickstofffördersystem ist jeweils dazu eingerichtet, zumindest eine Betriebsinformation zu empfangen. Die Betriebsinformation ist indikativ für eine Eigenschaft einer Vielzahl von möglichen Eigenschaften von Dickstoffverteilermast, Dickstoffpumpe und Dickstofffördersystem oder deren Komponenten und repräsentativ für diese Eigenschaft. Eine Betriebsinformation soll sich somit einer Komponente zuordnen lassen können. Eine solche Eigenschaft kann, wie auch Betriebsparameter, beispielsweise durch eine Messgröße charakterisiert werden. Es kann sich um Eigenschaften handeln, die bereits vor oder erst nach einem Beginn des Förderns zu Tage treten. Beispielsweise kann das Empfangen einer Betriebsinformation durch ein Messen einer für diese Betriebsinformation charakteristischen Messgröße erfolgen. Ebenso kann die von der Empfangseinheit empfangene Betriebsinformation vorgeben oder Ergebnis einer vorgeschalteten Berechnung sein, in die zum Beispiel ihrerseits eine oder mehrere Messgrößen eingegangen sind. Es ist denkbar eine solche vorgeschaltete Berechnung direkt vor Ort in einer entsprechend eingerichteten Einheit des Dickstoffverteilermasts, der Dickstoffpumpe und des Dickstofffördersystems erfolgt, sie kann aber auch extern, zum Beispiel auf einer Servervorrichtung erfolgt sein, und die so berechnete Betriebsinformation dann von der Empfangseinheit empfangen werden.

Die Verarbeitungseinheit soll als eingerichtet zum Bestimmen eines Standsicherheitsparameters des Dickstofffördersystems verstanden werden. Dies soll zumindest teilweise abhängig von der zumindest einen empfangenen Betriebsinformation erfolgen. Dazu kann sie zum Beispiel Zugriff auf die von der Empfangseinheit empfangenen Informationen haben. Unter dem Bestimmen des Standsicherheitsparameters soll verstanden werden, dass der Standsicherheitsparameter abhängig von den empfangenen Betriebsinformationen unter Zugrundelegung vorgegebener und als konstant angenommenen Eigenschaften von Komponenten des Dickstofffördersystems, wie deren Masse oder deren räumliche Ausdehnung, berechnet wird. Zusätzlich können dabei auch noch weitere Eigenschaften wie zum Beispiel die Positionierung von Stützbeinen zueinander, der Einfluss von Windflächen der Komponenten, sowie vorgegebene Sicherheits- oder Grenzwerte berücksichtigt werden.

Der Unterbau umfasst ein Stützwerk zur Abstützung des Unterbaus mit zumindest einem horizontal und/oder vertikal verfahrbaren Stützbein. Ein Stützbein eines Dickstofffördersystems stellt eine Komponente des Stützwerks dar, die der Erhöhung der Standsicherheit des Dickstofffördersystems dient. Der Einfluss des Stützwerks auf die Standsicherheit ist dabei insbesondere von einer individuellen Anordnung und Aufstellung von Stützbeinen abhängig. Dazu ist das Stützbein auf einem Untergrund mit einem Abstützteller abstützbar. Üblicherweise sind bei einem Stützwerk vier Stützbeine vorgesehen.

Die Standsicherheit des Stützwerks, und damit des gesamten Dickstofffördersystems, ist umso höher, je größer der Abstand Wirkungslinie, die sämtliche auf das Dickstofffördersystem wirkenden Kräfte berücksichtigt, von den Kippkanten dieser Fläche ist. Eine verlässliche Aussage über die Standsicherheit kann aber schon bei Zugrundelegung einer Wirkungslinie getroffen werden, die zumindest die auf das Dickstofffördersystem wirkende Gewichtskraft berücksichtigt. Je mehr der tatsächlich wirkenden Kräfte in der Wirkungslinie berücksichtigt werden, desto präziser kann diese Aussage getroffen werden. Daher kann die Standsicherheit des Dickstofffördersystems besonders vorteilhaft durch einen den Abstand der Wirkungslinie von den Kippkanten der Aufstandsfläche repräsentierenden Standsicherheitsparameter charakterisiert werden. Der Standsicherheitsparameter befindet sich innerhalb eines vorgegebenen oder dynamisch bestimmbaren Standsicherheitsbereichs, innerhalb welchem der Abstand der Wirkungslinie von jeder der Kippkanten größer als oder gleich Null ist, vorzugsweise wird dabei noch eine Sicherheitsreserve berücksichtigt. Innerhalb des Standsicherheitsbereichs ist die Standsicherheit des Stützwerks und damit des Dickstofffördersystems gegeben. Die Obergrenze des Standsicherheitsbereichs wird durch einen maximalen Standsicherheitsparameter definiert. Der maximale Standsicherheitsparameter liegt dann vor, wenn der Abstand der Wirkungslinie von einer der Kippkanten Null ist. Entsprechend nimmt der Abstand der Wirkungslinie von zumindest einer der Kippkanten mit zunehmendem Standsicherheitsparameter ab. Oberhalb der Obergrenze ist der Abstand kleiner als Null und die Standsicherheit nicht mehr gegeben. Es ist denkbar, dass ein Standsicherheitsbereich für jede Betriebssituation des Dickstofffördersystems vorgegeben oder bestimmbar ist, zum Beispiel unter Berücksichtigung konstant angenommener Eigenschaften der zu berücksichtigenden Komponenten des Dickstofffördersystems. Beispielsweise kann dazu für jede mögliche Anordnung des Stützwerks, zum Beispiel durch eine bestimmte Aufstellung von Stützbeinen, eine Aufstandsfläche vorgegeben oder bestimmbar sein. Der Standsicherheitsbereich umfasst ferner eine Nachstützschwelle und optional auch eine Abschaltschwelle. Zum Beispiel kann die Abschaltschwelle näher an dem maximalen Standsicherheitsparameter und damit näher an der Obergrenze der Standsicherheit liegen als die Nachstützschwelle. Entsprechend kommt es während der Auslenkung einer Mastanordnung eines Dickstoffverteilermasts hin zu Randlagen aufgrund der dadurch auf das Stützwerk wirkenden Momente erst zu einer Überschreitung der Nachstützschwelle, dann der Abschaltschwelle, und danach der Obergrenze.

Der Abstand der Wirkungslinie von einer der Kippkanten sowie die Lage der Wirkungslinie sind jeweils zumindest von der Gewichtskraft des Dickstofffördersystems abhängig und können zum Beispiel von der Verarbeitungseinheit berechnet werden. Die Lage der Wirkungslinie kann vertikale und horizontale Richtungskomponenten aufweisen, und von Wirkungsrichtungen und/oder Beträgen mehrerer Kräfte abhängen. Beispielsweise können eine oder mehrere dabei zu berücksichtigende Kräfte vorgegeben oder von einem Benutzer (z.B. mittels einer geeigneten Benutzerschnittstelle) auswählbar sein. Wird zum Beispiel nur die Gewichtskraft eines Dickstofffördersystems berücksichtigt, dann entspricht die Wirkungslinie einer durch den Gesamtschwerpunkt verlaufenden Lotlinie. Die Lage der Wirkungslinie gleicht dann der Lage der Lotlinie. Ist die Lage der Wirkungslinie zusätzlich von einer Kraft abhängig, die eine horizontale Komponente aufweist, wie zum Beispiel eine auf das Dickstofffördersystem seitlich einwirkende Windkraft, dann umfasst die Lage der Wirkungslinie auch zumindest eine horizontale Komponente, und ihre Lage ist ungleich der Lotlinie. Es ist denkbar, dass die Lage der Wirkungslinie auf eine solche Weise von einer oder mehreren weiteren Kräften abhängig ist, dass die Verarbeitungseinheit die Lage, vorzugsweise nur, bei Eintreffen einer oder mehrerer spezifischer Bedingungen, zum Beispiel oberhalb einer beim Betrieb des Dickstofffördersystems vorherrschenden Windstärke, stufenweise, zum Beispiel um jeweils einen vorgegebenen Betrag in eine vorgegebene Richtung, anpassen kann. Es ist auch denkbar, dass die Lage der Wirkungslinie von den Wirkungsrichtungen und/oder Beträgen einer oder mehrerer, vorzugsweise sämtlicher, von der Empfangseinheit empfangenen und für Kräfte indikativen Betriebsinformationen abhängt.

Beispielsweise kann der Standsicherheitsbereich als eine Distanzreserve beschrieben werden, die einen minimalen Wert aufweist, bei dessen Überschreiten die Standsicherheit des Stützwerks nicht mehr gegeben ist. So kann jede Bewegung einer Komponente zu einer Abnahme, beispielsweise bei einer Auslenkung eines Mastarms eines Dickstoffverteilermasts in distaler Richtung, oder einer Zunahme, wiederum beispielsweise bei einer Auslenkung eines Mastarms in proximaler Richtung, der Distanzreserve führen. Ist die Distanzreserve aufgebraucht, so liegt ein maximaler Standsicherheitsparameter vor und die Obergrenze des Standsicherheitsbereichs ist erreicht. Erfolgt der Betrieb der betrachteten Komponente dahingehend, dass zu erwarten ist, dass die Distanzreserve zunimmt, so kann ein solcher Betrieb, gegebenenfalls mit reduzierter Geschwindigkeit, erfolgen.

Die Steuereinheit umfasst entsprechende Mittel, um Steuersignale auszugeben, wie beispielsweise einen drahtgebundenen oder drahtlosen Signalausgang. Durch die Ausgabe von Steuersignalen auf die beschriebene Art und Weise kann die Steuereinheit zumindest eine Komponente des Dickstofffördersystems ansteuern, und auf einen Betriebsparameter der Komponente einwirken, und insbesondere durch die Ausgabe eines ersten Steuersignals ein Nachstützen des zumindest einen Stützbeins unterbinden. Ein optionales Ausgeben weiterer Steuersignale kann alternativ oder zusätzlich zum Ausgeben des ersten Steuersignals erfolgen.

Beispielsweise ist die Empfangseinheit zum Empfangen einer Betriebsinformation eingerichtet, die indikativ ist für ein Gelenkmoment eines Mastarms, für eine Zylinderkraft eines Mastarms des Dickstofffördersystems, für einen Neigungswinkel zumindest eines Mastarms, für eine Aktuatorkraft zumindest eines Aktuators eines Mastarms, für eine Betriebsgeschwindigkeit zumindest eines Aktuators eines Mastarms, für ein Lastgewicht an einem Lastanhängepunkt des Dickstoffverteilermasts, für eine Drehgeschwindigkeit eines Drehwerks, für einen Neigungswinkel des Dickstofffördersystems, für einen Aushub des Dickstofffördersystems eine Position des zumindest einen Stützbeins und/oder für eine horizontale oder eine vertikale Beinkraft des zumindest einen Stützbeins.

Bei dem Gelenkmoment eines Mastarms handelt es sich um das auf dessen Mastgelenk wirkende Moment. Dieses stellt ein Moment dar, das unter anderem abhängig ist von dem Gesamtgewicht der Mastanordnung, von Windlasten, vom Gewicht eines momentan fördernden Dickstoffs oder auch von einem am distalen Ende des ersten Mastarms der Mastanordnung wirkenden Gewicht, entsprechend einer Mastspitzenlast. Das Gelenkmomentkann beispielsweise durch Messung einer im Aktuator des Mastarms wirkenden Zylinderkraft oder eines im Aktuator des Mastarms wirkenden Zylinderdrucks in Verbindung mit einer oder mehreren Messungen, wie zum Beispiel einer Messung des jeweiligen Gelenkwinkels, auf das Gelenkmoment geschlossen werden. Beispielsweise kann das Gelenkmoment eines Mastarms mittels einer Übertragungsfunktion aus einer Zylinderkraft und einem Gelenkwinkel des Mastgelenks des jeweiligen Mastarms berechnet werden. Bei dem Neigungswinkel eines Mastarms kann es sich um einen absoluten Neigungswinkel, das heißt um einen Winkel, der die Lage des Mastarms gegenüber der Lotrichtung, handeln oder um einen relativen Neigungswinkel, das heißt um einen Differenzwinkel zwischen Neigungswinkeln zweier, insbesondere benachbarter, Mastarme. Im letzten Fall entspricht der Differenzwinkel dann dem Öffnungswinkel des distalen Mastarms. Das Lastgewicht entspricht der am Lastanhängepunkt wirkenden Gewichtskraft. Bei dem Neigungswinkel des Dickstofffördersystems soll es sich um einen Winkel des Dickstofffördersystems gegenüber der Lotrichtung handeln. Ein Aushub liegt vor, wenn das Dickstofffördersystem von seinem Stützwerk, zum Beispiel den Stützbeinen des Stützwerks, getragen wird. Darüber hinaus kann der betrachtete Aushub weitergehend charakterisiert werden, zum Beispiel anhand seiner Höhe. Die Position des zumindest einen Stützbeins ist von besonderer Aussagekraft für die Bestimmung des Standsicherheitsparameters, da sie typischerweise signifikanten Einfluss auf die Gestalt der Aufstandsfläche hat. Dabei werden insbesondere Betrag und/oder Richtung des horizontalen Abstands der Aufstellfläche des Stützbeins im jeweils vorliegenden Betriebszustand gegenüber einer Nullstellung im eingefahrenen Zustand berücksichtigt. Zusätzlich kann dabei auch der vertikale Abstand charakterisiert und berücksichtigt werden. Denkbar ist auch, dass ein Beinpositionssensor als ein GPS-Sensor ausgeführt ist. Unter einer horizontalen oder vertikalen Beinkraft soll eine auf ein Stützbein wirkende horizontale oder vertikale Kraft verstanden werden.

Weitere beispielhafte Betriebsinformationen sind indikativ für Gewichte aller Mastarme mit befüllter und/oder mit unbefüllter Förderleitung, für Positionen der Schwerpunkte aller Mastarme, für Gewichte von Zusatzlasten, für Positionen von Zusatzgewichtanhängepunkten, für auf die Mastarme wirkende Windkräfte, für Positionen der Windflächenschwerpunkte aller Mastarme, für ein Gewicht des Unterbaus, für eine Position des Schwerpunkte des Unterbaus und für Positionen der Aufstellflächen der Stützbeine im eingefahrenen und/oder im ausgefahrenen Zustand.

Anhand dieser Eigenschaften lässt sich der Standsicherheitsparameter des Dickstofffördersystems zuverlässig bestimmen. Dies ermöglicht es wiederum, eine verlässliche Aussage über die Standsicherheit des Dickstofffördersystems zu treffen.

Gemäß einer Ausführungsform ist die Steuereinheit dazu eingerichtet, ein zweites Steuersignal auszugeben, falls der bestimmte Standsicherheitsparameter unterhalb der Nachstützschwelle liegt, wobei die Ausgabe des zweiten Steuersignals ein Nachstützen des zumindest einen Stützbeins freigibt. Beispielsweise kann die Steuereinheit durch die Ausgabe des zweiten Steuersignals bewirken, dass die für ein Nachstützen erforderlichen Komponenten des Dickstofffördersystems, also insbesondere die Stützbeine und deren Aktuatoren, für einen Nachstützvorgang bereitgehalten werden.

So kann erreicht werden, dass die Möglichkeit zum Nachstützen des Dickstofffördersystems aufrechterhalten wird, sofern die dafür erforderliche Standsicherheit gegeben oder wiedererlangt worden ist. So kann sichergestellt werden, dass die Standsicherheit gewahrt bleibt, ohne dass eine allgemeine, gegebenenfalls situationsunabhängige, Beschränkung der möglichen Nachstützvorgänge, wie zum Beispiel eine vorgegebene maximale Anzahl von Nachstützvorgängen, erforderlich ist.

Vorzugsweise ist die Steuereinheit dazu eingerichtet, ein drittes Steuersignal auszugeben, falls der bestimmte Standsicherheitsparameter oberhalb einer Abschaltschwelle liegt, wobei die Ausgabe des dritten Steuersignals eine Einstellung des ordnungsgemäßen Betriebs des Dickstoffverteilermasts bewirkt. Zum Beispiel kann durch die Ausgabe des dritten Steuersignals bewirkt werden, dass die Aktuatoren der Mastarme in ihrer jeweiligen aktuellen Position verharren. Es ist denkbar, dass für einen Weiterbetrieb des Dickstoffverteilermasts nach Ausgabe des dritten Steuersignals ein Empfang einer Bestätigung an der Empfangseinheit, zum Beispiel in Form einer entsprechenden Benutzereingabe an einer Benutzerschnittstelle der Empfangseinheit oder einer entsprechenden Bestätigungsnachricht an einer Kommunikationsschnittstelle der Empfangseinheit, erforderlich ist.

Durch die Einstellung des ordnungsgemäßen Betriebs nach Ausgabe des dritten Steuersignals kann eine zusätzliche Sicherheitsebene realisiert werden. Beispielsweise kann jeglicher Betrieb des Dickstoffverteilermasts unterbunden werden, oder nur ein solcher Betrieb, bei dem sich die Standsicherheit des Dickstofffördersystems verschlechtert, sprich bei dem ein zu bestimmender Standsicherheitsparameter näher an dem maximalen Standsicherheitsparameter liegt.

Alternativ oder zusätzlich ist Empfangseinheit dazu eingerichtet, eine Betriebsinformation zu empfangen, die indikativ für eine horizontale und/oder vertikale Position des zumindest einen Stützbeins ist, und die Verarbeitungseinheit dazu eingerichtet, die Nachstützschwelle und/oder die Abschaltschwelle abhängig von der empfangenen für die horizontale und/oder vertikale Position des zumindest einen Stützbeins indikativen Betriebsinformation zu bestimmen.

Da die Position des zumindest einen Stützbeins aufgrund ihres typischerweise signifikanten Einflusses auf die Gestalt der Aufstandsfläche des Dickstofffördersystems von besonderer Aussagekraft für die Bestimmung des Standsicherheitsparameters ist, kann eine von dieser Betriebsinformation abhängige Bestimmung der Nachstützschwelle und/oder der Abschaltschwelle besonders effektiv gelingen. Beispielsweise kann die Nachstützschwelle und/oder die Abschaltschwelle abhängig von Betrag und/oder Richtung des horizontalen Abstands der Aufstellfläche des Stützbeins im jeweils vorliegenden Betriebszustand gegenüber einer Nullstellung im eingefahrenen Zustand bestimmt werden. Da der Einfluss der Stützbeinposition auf die Aufstandsfläche bei einem geringeren Betrag des horizontalen Abstands geringer ist als bei einem größeren horizontalen Abstand, kann dann die Nachstützschwelle und/oder die Abschaltschwelle beispielhaft als näher an dem maximalen Standsicherheitsparameter liegend bestimmt werden als bei einem größeren Betrag.

Es ist ebenfalls denkbar, dass die Nachstützschwelle und/oder die Abschaltschwelle zusätzlich abhängig von zumindest einer Prognoseinformation bestimmt werden, die charakteristisch für eine prognostizierte Änderung des Standsicherheitsparameters nach während des Nachstützvorgangs ist. In vereinfachter Weise kann dazu ein Standsicherheitsparameter prognostiziert werden, wobei angenommen wird, dass sich das nachzustützende Stützbein in einer Nullstellung befindet, und weder horizontal noch vertikal ausgefahren ist und auch keine vertikale Beinkraft anliegt. Durch Vergleich des bestimmten Standsicherheitsparameters und des prognostizierten Standsicherheitsparameters kann auf die prognostizierte Änderung geschlossen werden. Beispielsweise kann bei einer geringen prognostizierten Änderung die Nachstützschwelle und/oder die Abschaltschwelle als näher an dem maximalen Standsicherheitsparameter liegend bestimmt werden als bei einem größeren prognostizierten Änderung.

Das ermöglicht eine dynamische und situationsangepasste Bestimmung von Nachstützschwelle und/oder Abschaltschwelle, sodass die Steuereinheit stets für den aktuellen Betriebszustand optimierte Werte von Nachstützschwelle und/oder Abschaltschwelle berücksichtigen kann. Dadurch kann das Dickstofffördersystem noch effizienter betrieben werden.

In einer weiteren Ausführungsform ist das zumindest eine Stützbein mehrfach, vorzugsweise maximal vierfach, nachstützbar.

Die Option eines mehrfachen Nachstützens eröffnet die Möglichkeit, den Förderbetrieb des Dickstofffördersystems auch bei veränderlichen Szenarien im Wesentlichen unterbrechungsfrei fortzuführen. Beispielsweise kann so eine Betriebsfortführung auch auf einem mit der Zeit absackenden Untergrund oder bei zunehmendem Wind erreicht werden. Ebenso können aus dem laufenden Betrieb heraus mittels mehrfachen Nachstützens spontan geforderte, ungeplante Ausweitungen des Arbeitsbereichs des Dickstoffverteilermasts ohne ein erneutes Aufstellen des Dickstofffördersystems ermöglicht werden.

Gleichzeitig ist es vorteilhaft, eine maximale Anzahl von Nachstützvorgängen festzulegen. Auf diese Weise kann die Überprüfung der Aufstellung des Dickstofffördersystems zumindest nach einer vorgegebenen Anzahl von durchgeführten Nachstützungen gefordert werden, was eine zusätzliche Kontrollinstanz beim Betrieb des Dickstofffördersystems bedeutet und die Betriebssicherheit weiter erhöht. In der Praxis hat sich dabei eine maximale Anzahl von vier Nachstützungen als vorteilhaft herausgestellt.

Zusätzlich kann die Empfangseinheit dazu eingerichtet sein, eine Betriebsinformation zu empfangen, die indikativ für einen Neigungswinkel des Unterbaus ist, die Verarbeitungseinheit dazu eingerichtet sein, eine maximal zulässige Anzahl von Nachstützungen zu bestimmen, abhängig von der empfangenen für den Neigungswinkel des Unterbaus indikativen Betriebsinformation, und die Steuereinheit dazu eingerichtet sein, das erste Steuersignal auszugeben, falls eine Anzahl von erfolgten Nachstützungen der maximal zulässigen Anzahl entspricht.

Das Verhältnis zwischen dem Gesamtschwerpunkt des Dickstofffördersystems und dessen Aufstandsfläche, und somit auch die Standsicherheit, wird erheblich vom Neigungswinkel des Unterbaus beeinflusst. Auch die Wirkung von Nachstützungen auf das Verhältnis zwischen Gesamtschwerpunkt und Aufstandsfläche ist abhängig vom Neigungswinkel des Unterbaus. Daher ist es vorteilhaft, die maximale Anzahl von zulässigen Nachstützvorgängen abhängig vom Neigungswinkel des Unterbaus zu bestimmen.

Mit Vorteil ist die Verarbeitungseinheit eingerichtet, eine maximal zulässige Anzahl von vier Nachstützungen zu bestimmen, falls die für den Neigungswinkel des Unterbaus (30) indikative Betriebsinformation einen Neigungswinkel mit einem Betrag von maximal 1° charakterisiert, und/oder wobei die Verarbeitungseinheit eingerichtet ist, eine maximal zulässige Anzahl von drei Nachstützungen zu bestimmen, falls die für den Neigungswinkel des Unterbaus indikative Betriebsinformation einen Neigungswinkel mit einem Betrag von maximal 2° charakterisiert, und/oder wobei die Verarbeitungseinheit eingerichtet ist, eine maximal zulässige Anzahl von zwei Nachstützungen zu bestimmen, falls die für den Neigungswinkel des Unterbaus indikative Betriebsinformation einen Neigungswinkel mit einem Betrag von maximal 2,5° charakterisiert, und /oder wobei die Verarbeitungseinheit eingerichtet ist, eine maximal zulässige Anzahl von einer Nachstützung zu bestimmen, falls die für den Neigungswinkel des Unterbaus (30) indikative Betriebsinformation einen Neigungswinkel mit einem Betrag von maximal 3° charakterisiert.

Diese Werte haben sich in der Praxis als besonders vorteilhaft erwiesen.

Gemäß einem Ausführungsbeispiel umfasst die Empfangseinheit eine Sensoreinheit zum Erfassen einer Betriebsinformation, eine Kommunikationsschnittstelle zum Erfassen einer Betriebsinformation, oder eine Benutzerschnittstelle zum Erfassen einer Betriebsinformation.

Durch Verwendung einer Sensoreinheit kann die Empfangseinheit Betriebsinformationen selbsttätig und unabhängig von einer Benutzereingabe erfassen. Die Sensoreinheit kann einen oder mehrere Sensoren gleichen oder unterschiedlichen Typs umfassen. Beispielhafte Sensoren sind Kraft- und Drucksensoren (z.B. zum Erfassen einer Zylinderkraft eines Mastgelenks eines Mastarms, einer auf einen Aktuator eines Mastarms wirkenden Kraft oder der Last des Endschlauchs), Positionssensoren (z.B. Sensoren eines satellitengestützten Positionssystems wie GPS, GLONASS oder Galileo), Lagesensoren (z.B. Wasserwaagen oder Neigungssensorik zum Erfassen eines Neigungswinkels eines Mastarms), elektrische Sensoren (z.B. Induktionssensoren), optische Sensoren (z.B. Lasersensoren oder 2D-Scanner) oder akustische Sensoren (z.B. Ultraschallsensoren), beispielsweise zum Erfassen der Dichte des zu fördernden Dickstoffs. Gleichermaßen kann eine Betriebsinformation auch durch ein Zusammenwirken mehrerer Sensoren der Sensoreinheit erfasst werden.

Alternativ oder zusätzlich kann die jeweilige Empfangseinheit auch eine oder mehrere (z.B. drahtlose) Kommunikationsschnittstellen umfassen, durch die (z.B. extern) erfasste Betriebsinformationen von der Empfangseinheit auf fachmännisch bekanntem Wege empfangen werden.

Ist eine Benutzerschnittstelle zum Erfassen von Betriebsinformationen vorgesehen, so kann diese beispielhaft als zumindest eine Taste, ein Tastenfeld, eine Tastatur, eine Maus, eine Anzeigeeinheit (z.B. ein Display), ein Mikrofon, eine berührungsempfindliche Anzeigeeinheit (z.B. ein Touchscreen), eine Kamera und/oder eine berührungsempfindliche Oberfläche (z.B. ein Touchpad) ausgebildet sein. Zum Beispiel erfolgt das Empfangen der Betriebsinformation durch ein Erfassen einer Benutzereingabe an der Benutzerschnittstelle.

Gemäß der Erfindung wird zudem ein Verfahren offenbart zum Betreiben eines Dickstofffördersystems, mit einer Dickstoffpumpe zum Fördern eines Dickstoffs, einem Dickstoffverteilermast zum Verteilen des zu fördernden Dickstoffs, wobei der Dickstoffverteilermast eine zumindest zwei Mastarme umfassende Mastanordnung aufweist, einem Unterbau, an dem der Dickstoffverteilermast und die Dickstoffpumpe angeordnet sind, wobei der Unterbau ein Stützwerk zur Abstützung des Unterbaus mit zumindest einem horizontal und/oder vertikal verfahrbaren Stützbein umfasst, wobei das Stützwerk einen Standsicherheitsbereich mit einer Nachstützschwelle und mit einer durch einen maximalen Standsicherheitsparameter definierten Obergrenze aufweist, und wobei das zumindest eine Stützbein nachstützbar ist, sowie mit einer Empfangseinheit, einer Verarbeitungseinheit und einer Steuereinheit, wobei das Verfahren die folgenden Schritte umfasst: Empfangen, durch die Empfangseinheit, zumindest einer Betriebsinformation; Bestimmen, durch die Verarbeitungseinheit, eines Standsicherheitsparameters des Dickstofffördersystems abhängig von der zumindest einen empfangenen Betriebsinformation; und Ausgeben, durch die Steuereinheit, eines ersten Steuersignals zum Unterbinden eines Nachstützens des zumindest einen Stützbeins, falls der bestimmte Standsicherheitsparameter des Dickstofffördersystems oberhalb der Nachstützschwelle liegt, wobei die Ausgabe des ersten Steuersignals ein Nachstützen des zumindest einen Stützbeins unterbindet.

In einer Ausführungsform umfasst das Verfahren ferner den Schritt: Ausgeben, durch die Steuereinheit, eines zweiten Steuersignals, falls der bestimmte Standsicherheitsparameter unterhalb der Nachstützschwelle liegt, wobei die Ausgabe des zweiten Steuersignals ein Nachstützen des zumindest einen Stützbeins freigibt.

In einer weiteren Ausführungsform umfasst das Verfahren ferner den Schritt: Ausgeben, durch die Steuereinheit, eines dritten Steuersignals, falls der bestimmte Standsicherheitsparameter oberhalb einer Abschaltschwelle liegt, wobei die Ausgabe des dritten Steuersignals eine Einstellung des ordnungsgemäßen Betriebs des Dickstoffverteilermasts bewirkt.

Zur näheren Erläuterung weiterer vorteilhafter Weiterbildungen des Verfahrens wird auf die vorstehend beschriebenen Weiterbildungen des Dickstofffördersystems Bezug genommen.

Es gibt ebenso ein Computerprogramm mit Programmanweisungen, einen Prozessor zur Ausführung und/oder Steuerung des Verfahrens zu veranlassen, wenn das Computerprogramm auf dem Prozessor ausgeführt wird. Das Computerprogramm ist beispielsweise auf einem computerlesbaren Datenträger gespeichert.

Die Erfindung wird nachfolgend unter Bezugnahme auf die beigefügten Zeichnungen anhand von vorteilhaften Ausführungsformen beispielhaft näher erläutert. Es zeigen:
- Fig. 1: eine schematische Darstellung eines Ausführungsbeispiels eines erfindungsgemäßen Dickstofffördersystems Seitansicht,
- Fig. 2: eine schematische Darstellung eines Ausführungsbeispiels eines erfindungsgemäßen Dickstofffördersystems in Draufsicht, und
- Fig. 3: ein schematisches Flussdiagramm eines Ausführungsbeispiels eines erfindungsgemäßen Verfahrens.

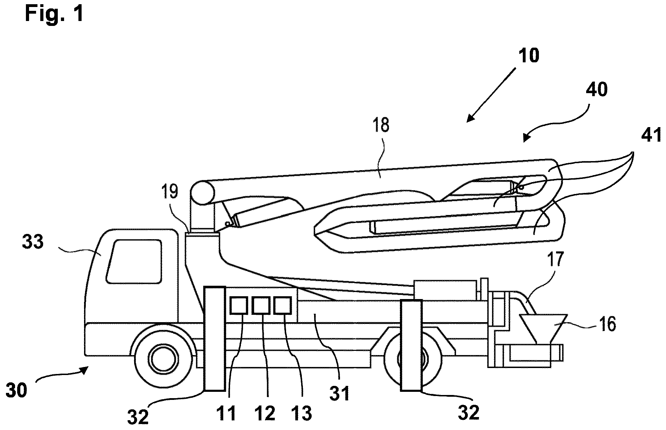

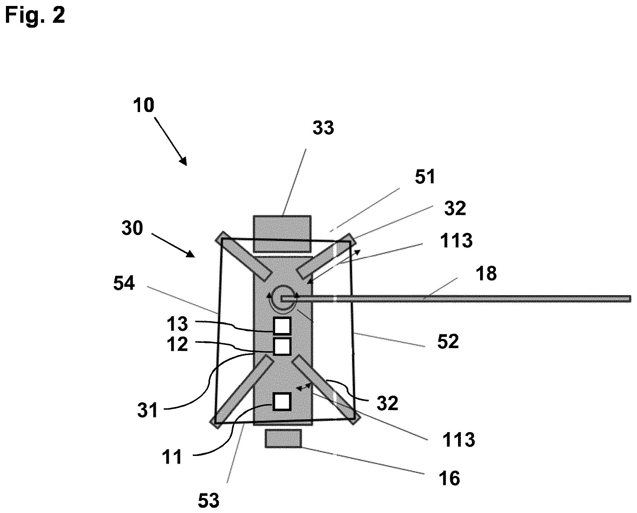

In den Fig. 1 und 2 ist jeweils ein Dickstofffördersystem 10 gezeigt, das eine Dickstoffpumpe 16 zum Fördern eines Dickstoffs und einen Dickstoffverteilermast 18 zum Verteilen des zu fördernden Dickstoffs umfasst, wobei der Dickstoffverteilermast 18 ein um eine vertikale Achse drehbares Drehwerk 19 und eine Mastanordnung 40 mit Mastarmen 41 aufweist. Ferner ist auch eine sich über die Mastanordnung 40 erstreckende Förderleitung 17 dargestellt, die mit der Dickstoffpumpe 16 verbunden ist.

Darüber hinaus umfasst das Dickstofffördersystem 10 einen Unterbau 30, an dem der Dickstoffverteilermast 18 und Dickstoffpumpe 16 angeordnet sind. Der Unterbau 30 weist ein Stützwerk 31 mit vier Stützbeinen 32 zur Abstützung des Unterbaus 30 auf. Der Unterbau 30 ist beispielhaft als auf einem Fahrzeug 33 angeordnet dargestellt.

Des weiteren sind eine Empfangseinheit 11, eine Verarbeitungseinheit 12 und eine Steuereinheit 13 vorgesehen. Die Empfangseinheit 11 ist dazu eingerichtet, zumindest eine Betriebsinformation zu empfangen. Dazu kann sie zum Beispiel über eine Sensoreinheit verfügen, die wiederum beispielhaft für jedes Stützbein 32 zumindest einen Sensor 113 aufweisen kann, der eine für die Position des jeweiligen Stützbeins 32 indikative Betriebsinformation erfasst.

Abhängig von der zumindest einen empfangenen Betriebsinformation, sprich zum Beispiel von den erfassten für die Positionen der Stützbeine 32 indikativen Betriebsinformationen, bestimmt die Verarbeitungseinheit 12 einen Standsicherheitsparameter des Dickstofffördersystems 10. Der so bestimmte Standsicherheitsparameter liegt in einem Standsicherheitsbereich, innerhalb welchem eine Nachstützschwelle vorgegeben ist. Optional kann auch eine Abschaltschwelle vorgegeben sein. Weiter optional können die Nachstützschwelle und/oder die Abschaltschwelle auch abhängig von der empfangenen für die horizontale und/oder vertikale Position des zumindest einen Stützbeins indikativen Betriebsinformation bestimmt werden.

Bestimmt die Verarbeitungseinheit 12 einen Standsicherheitsparameter, der Nachstützschwelle liegt, dann gibt die Steuereinheit 13 ein erstes Steuersignal aus. Das erste Steuersignal bewirkt ein Unterbinden eines Nachstützens des zumindest einen Stützbeins 32 und beispielsweise sämtlicher Stützbeine 32 des Stützwerks 31. Es ist aber auch denkbar, dass für jedes der Stützbeine 32 eine individuelle Nachstützschwelle berücksichtigt wird, beispielsweise abhängig von der horizontalen Position des jeweiligen Stützbeins 32. Beispielhaft können sämtliche Stützbeine 32 des Stützwerks 31 mehrfach nachgestützt werden.

Das in Fig. 2 gezeigte Dickstofffördersystem 10 weist vier Kippkanten 51, 52, 53, 54 auf. Die Kippkanten 51, 52, 53, 54 werden insbesondere durch die Positionen der Stützbeine 32 definiert. Je größer der Abstand der zumindest die am Gesamtschwerpunkt des Dickstofffördersystems 10 wirkende Gewichtskraft berücksichtigenden Wirkungslinie von den Kippkanten 51, 52, 53, 54 der Aufstandsfläche ist, desto höher ist dessen Standsicherheit. Die von den Kippkanten 51, 52, 53, 54 umgrenzte Fläche beschreibt die Aufstandsfläche. Nähert sich der Gesamtschwerpunkt des Dickstofffördersystems 10 dem Rand der Aufstandsfläche, sprich einer der Kippkanten 51, 52, 53, 54, zum Beispiel bei einer besonders weitreichenden horizontalen Auslenkung des Dickstoffverteilermasts 18 oder beim Fördern eines besonders schweren Dickstoffs durch die sich über die Mastanordnung 40 erstreckende Förderleitung 17, verringert sich die Standsicherheit des Dickstofffördersystems 10. Verläuft die Wirkungslinie nicht mehr innerhalb der Aufstandsfläche, ist der Abstand der Wirkungslinie von einer der Kippkanten 51, 52, 53, 54 kleiner als Null und die Standsicherheit des Dickstofffördersystems nicht mehr gegeben.

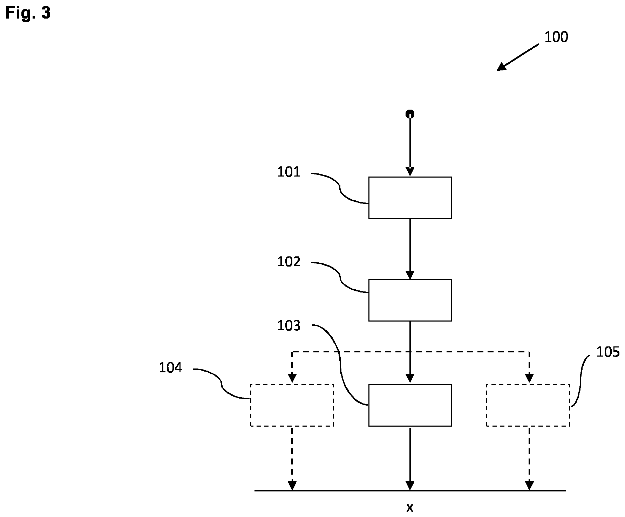

Fig. 3 zeigt ein Flussdiagramm eines Ausführungsbeispiels eines Verfahrens 100 zum Betreiben eines Dickstofffördersystems 10.

In einem Verfahrensschritt 101 empfängt die Empfangseinheit 11 zumindest eine Betriebsinformation. Analog zum oben gewählten Beispiel soll diese Betriebsinformation für die horizontale Position eines Stützbeins 32 indikativ sein und beispielsweise Betrag und Richtung des horizontalen Abstands der Aufstellfläche des Stützbeins 32 im aktuell vorliegenden Betriebszustand gegenüber einer Nullstellung im eingefahrenen Zustand charakterisieren.

Abhängig von dieser und/oder weiteren in Schritt 101 empfangenen Betriebsinformationen bestimmt die Verarbeitungseinheit 12 in Schritt 102 einen Standsicherheitsparameter des Unterbaus 30 und somit des Dickstofffördersystems 10.

Anschließend erfolgt in Schritt 103 ein Ausgeben eines ersten Steuersignals durch die Steuereinheit 13, falls der bestimmte Standsicherheitsparameter oberhalb der Nachstützschwelle des Standsicherheitsbereichs des Stützwerks 31 liegt. Das Ausgeben des ersten Steuersignals bewirkt ein Unterbinden des Nachstützens des Stützbeins 32.

Optional kann in Schritt 104 ein Ausgeben eines zweiten Steuersignals durch die Steuereinheit 13 erfolgen, falls der in Schritt 102 bestimmte Standsicherheitsparameter unterhalb der Nachstützschwelle liegt. Das Ausgeben des zweiten Steuersignals bewirkt eine Freigabe des Nachstützens des Stützbeins 32. Weiter optional kann in Schritt 105 ein Ausgeben eines dritten Steuersignals durch die Steuereinheit 13 erfolgen, falls der bestimmte Standsicherheitsparameter oberhalb einer Abschaltschwelle des Standsicherheitsbereichs des Stützwerks 31 liegt. Das Ausgeben des dritten Steuersignals bewirkt eine Freigabe des Nachstützens des Stützbeins 32.

## Patentansprüche

1. Dickstofffördersystem (10), mit
- einer Dickstoffpumpe (16) zum Fördern eines Dickstoffs,
- einem Dickstoffverteilermast (18) zum Verteilen des zu fördernden Dickstoffs, wobei der Dickstoffverteilermast (18) eine zumindest zwei Mastarme (41) umfassende Mastanordnung (40) aufweist,
- einem Unterbau (30), an dem der Dickstoffverteilermast (18) und die Dickstoffpumpe (16) angeordnet sind, wobei der Unterbau (30) ein Stützwerk (31) zur Abstützung des Unterbaus (30) mit zumindest einem horizontal und/oder vertikal verfahrbaren Stützbein (32) umfasst, wobei das Stützwerk (31) einen Standsicherheitsbereich mit einer Nachstützschwelle und mit einer durch einen maximalen Standsicherheitsparameter definierten Obergrenze aufweist, und wobei das zumindest eine Stützbein (32) nachstützbar ist,
- einer Empfangseinheit (11) zum Empfangen zumindest einer Betriebsinformation,
- einer Verarbeitungseinheit (12) zum Bestimmen eines Standsicherheitsparameters des Dickstofffördersystems (10) abhängig von der zumindest einen empfangenen Betriebsinformation, **dadurch gekennzeichnet, dass** das Dickstofffördersystem ferner umfasst
- eine Steuereinheit (13) zum Ausgeben eines ersten Steuersignals, falls der bestimmte Standsicherheitsparameter des Dickstofffördersystems (10) oberhalb der Nachstützschwelle liegt, wobei die Ausgabe des ersten Steuersignals ein Nachstützen des zumindest einen Stützbeins (32) unterbindet.

2. Dickstofffördersystem (10) gemäß Anspruch 1, dessen Steuereinheit (13) des weiteren zum Ausgeben eines zweiten Steuersignals eingerichtet ist, falls der bestimmte Standsicherheitsparameter unterhalb der Nachstützschwelle liegt, wobei die Ausgabe des zweiten Steuersignals ein Nachstützen des zumindest einen Stützbeins (32) freigibt.

3. Dickstofffördersystem (10) gemäß einem der voranstehenden Ansprüche, wobei dessen Steuereinheit (13) des weiteren zum Ausgeben eines dritten Steuersignals eingerichtet ist, falls der bestimmte Standsicherheitsparameter oberhalb einer Abschaltschwelle liegt, wobei die Ausgabe des dritten Steuersignals eine Einstellung des ordnungsgemäßen Betriebs des Dickstoffverteilermasts (18) bewirkt.

4. Dickstofffördersystem (10) gemäß einem der voranstehenden Ansprüche, dessen Empfangseinheit (11) dazu eingerichtet ist, eine Betriebsinformation zu empfangen, die indikativ für eine horizontale und/oder vertikale Position des zumindest einen Stützbeins ist, und dessen Verarbeitungseinheit (12) dazu eingerichtet ist, die Nachstützschwelle und/oder die Abschaltschwelle abhängig von der empfangenen für die horizontale und/oder vertikale Position des zumindest einen Stützbeins indikativen Betriebsinformation zu bestimmen.

5. Dickstofffördersystem (10) gemäß einem der voranstehenden Ansprüche, wobei das zumindest eine Stützbein (32) mehrfach, vorzugsweise maximal vierfach, nachstützbar ist.

6. Dickstofffördersystem (10) gemäß Anspruch 5, dessen Empfangseinheit (11) dazu eingerichtet ist, eine Betriebsinformation zu empfangen, die indikativ für einen Neigungswinkel des Unterbaus (30) ist, dessen Verarbeitungseinheit (12) dazu eingerichtet ist, eine maximal zulässige Anzahl von Nachstützungen zu bestimmen, abhängig von der empfangenen für den Neigungswinkel des Unterbaus (30) indikativen Betriebsinformation, und dessen Steuereinheit (13) dazu eingerichtet ist, das erste Steuersignal auszugeben, falls eine Anzahl von erfolgten Nachstützungen der maximal zulässigen Anzahl entspricht.

7. Dickstofffördersystem (10) gemäß Anspruch 6, wobei die Verarbeitungseinheit (12) eingerichtet ist, eine maximal zulässige Anzahl von vier Nachstützungen zu bestimmen, falls die für den Neigungswinkel des Unterbaus (30) indikative Betriebsinformation einen Neigungswinkel mit einem Betrag von maximal 1° (12) charakterisiert, und/oder wobei die Verarbeitungseinheit eingerichtet ist, eine maximal zulässige Anzahl von drei Nachstützungen zu bestimmen, falls die für den Neigungswinkel des Unterbaus (30) indikative Betriebsinformation einen Neigungswinkel mit einem Betrag von maximal 2° charakterisiert, und/oder wobei die Verarbeitungseinheit (12) eingerichtet ist, eine maximal zulässige Anzahl von zwei Nachstützungen zu bestimmen, falls die für den Neigungswinkel des Unterbaus (30) indikative Betriebsinformation einen Neigungswinkel mit einem Betrag von maximal 2,5° charakterisiert, und /oder wobei die Verarbeitungseinheit (12) eingerichtet ist, eine maximal zulässige Anzahl von einer Nachstützung zu bestimmen, falls die für den Neigungswinkel des Unterbaus (30) indikative Betriebsinformation einen Neigungswinkel mit einem Betrag von maximal 3° charakterisiert.

8. Dickstofffördersystem (10) gemäß einem der voranstehenden Ansprüche, dessen Empfangseinheit (11) zum Empfangen einer Betriebsinformation eingerichtet ist, die indikativ ist für eine der folgenden Eigenschaften:
- ein Gelenkmoment zumindest eines der Mastarme (41),
- eine Zylinderkraft zumindest eines der Mastarme (41),
- ein Neigungswinkel zumindest eines Mastarms (41),
- eine Aktuatorkraft zumindest eines Aktuators eines Mastarms (41),
- eine Betriebsgeschwindigkeit zumindest eines Aktuators eines Mastarms (41),
- ein Lastgewicht an einem Lastanhängepunkt des Dickstoffverteilermasts (18),
- eine Drehgeschwindigkeit eines Drehwerks (19),
- ein Neigungswinkel des Unterbaus (30),
- eine Position des zumindest einen Stützbeins (32),
- eine horizontale Beinkraft des zumindest einen Stützbeins (32), und
- eine vertikale Beinkraft des zumindest einen Stützbeins (32).

9. Dickstofffördersystem (10) gemäß einem der vorherigen Ansprüche, dessen Empfangseinheit (11) des weiteren umfasst:
- eine Sensoreinheit zum Erfassen einer Betriebsinformation,
- eine Kommunikationsschnittstelle zum Erfassen einer Betriebsinformation, oder
- eine Benutzerschnittstelle zum Erfassen einer Betriebsinformation.

10. Dickstofffördersystem (10) gemäß einem der vorherigen Ansprüche, dessen Unterbau (30) auf einem Fahrzeug (33) angeordnet ist.

11. Verfahren (100) zum Betreiben eines Dickstofffördersystems (10), mit einer Dickstoffpumpe (16) zum Fördern eines Dickstoffs, einem Dickstoffverteilermast (18) zum Verteilen des zu fördernden Dickstoffs, wobei der Dickstoffverteilermast (18) eine zumindest zwei Mastarme (41) umfassende Mastanordnung (40) aufweist, einem Unterbau (30), an dem der Dickstoffverteilermast (18) und die Dickstoffpumpe (16) angeordnet sind, wobei der Unterbau (30) ein Stützwerk (31) zur Abstützung des Unterbaus (30) mit zumindest einem horizontal und/oder vertikal verfahrbaren Stützbein (32) umfasst, wobei das Stützwerk (31) einen Standsicherheitsbereich mit einer Nachstützschwelle und mit einer durch einen maximalen Standsicherheitsparameter definierten Obergrenze aufweist, und wobei das zumindest eine Stützbein (32) nachstützbar ist, sowie mit einer Empfangseinheit (11), einer Verarbeitungseinheit (12) und einer Steuereinheit (13), wobei das Verfahren die folgenden Schritte umfasst:
- Empfangen (101), durch die Empfangseinheit (11), zumindest einer Betriebsinformation;
- Bestimmen (102), durch die Verarbeitungseinheit (12), eines Standsicherheitsparameters des Dickstofffördersystems (10) abhängig von der zumindest einen empfangenen Betriebsinformation; und
- Ausgeben (103), durch die Steuereinheit (13), eines ersten Steuersignals zum Unterbinden eines Nachstützens des zumindest einen Stützbeins (32), falls der bestimmte Standsicherheitsparameter des Dickstofffördersystems (10) oberhalb der Nachstützschwelle liegt.

12. Verfahren (100) gemäß Anspruch 11, das Verfahren ferner umfassend den Schritt:
- Ausgeben (104), durch die Steuereinheit (13), eines zweiten Steuersignals, falls der bestimmte Standsicherheitsparameter unterhalb der Nachstützschwelle liegt, wobei die Ausgabe des zweiten Steuersignals ein Nachstützen des zumindest einen Stützbeins (32) freigibt.

13. Verfahren (100) gemäß einem der Ansprüche 11 bis 12, das Verfahren ferner umfassend den Schritt:
- Ausgeben (105), durch die Steuereinheit (13), eines dritten Steuersignals, falls der bestimmte Standsicherheitsparameter oberhalb einer Abschaltschwelle liegt, wobei die Ausgabe des dritten Steuersignals eine Einstellung des ordnungsgemäßen Betriebs des Dickstoffverteilermasts (18) bewirkt.

## Claims

1. A thick matter conveying system (10), comprising
- a thick matter pump (16) for conveying thick matter,
- a thick matter distributor boom (18) for distributing the thick matter to be conveyed, wherein the thick matter distributor boom (18) has a boom arrangement (40) comprising at least two boom arms (41),
- a substructure (30) on which the thick matter distributor boom (18) and the thick matter pump (16) are arranged, wherein the substructure (30) comprises a supporting structure (31) for supporting the substructure (30) with at least one horizontally and/or vertically movable supporting leg (32), wherein the supporting structure (31) has a stability range with a support readjustment threshold and with an upper limit defined by a maximum stability parameter, and wherein the at least one supporting leg (32) is able to be readjusted,
- a receiving unit (11) for receiving at least one item of operating information,
- a processing unit (12) for determining a stability parameter of the thick matter conveying system (10) depending on the at least one item of operating information received,
**characterized in that** the thick matter conveying system further comprises
- a control unit (13) for outputting a first control signal if the determined stability parameter of the thick matter conveying system (10) lies above the support readjustment threshold, wherein the outputting of the first control signal prevents support readjustment of the at least one supporting leg (32).

2. The thick matter conveying system (10) of claim 1,
wherein the control unit (13) is further designed to output a second control signal if the determined stability parameter is below the support readjustment threshold, wherein the output of the second control signal enables the support readjustment of the at least one supporting leg (32).

3. The thick matter conveying system (10) of any one of the preceding claims, wherein the control unit (13) is further designed to output a third control signal if the determined stability parameter is above a switch-off threshold, wherein the output of the third control signal causes a setting of the correct operation of the thick matter distributor boom (18).

4. The thick matter conveying system (10) of any one of the preceding claims, wherein the receiving unit (11) is designed to receive operating information which is indicative of a horizontal and/or vertical position of the at least one supporting leg, and wherein the processing unit (12) is designed to determine the support readjustment threshold and/or the switch-off threshold as a function of the operating information which is indicative of the horizontal and/or vertical position of the at least one supporting leg.

5. The thick matter conveying system (10) of any one of the preceding claims, wherein the at least one supporting leg (32) is able to be readjusted repeatedly, preferably a maximum of four times.

6. The thick matter conveying system (10) of claim 5,
wherein the receiving unit (11) is designed to receive operating information which is indicative of an angle of inclination of the substructure (30), wherein the processing unit (12) is designed to determine a maximum permitted number of readjustment processes as a function of the received operating information which is indicative of the angle of inclination of the substructure (30), and wherein the control unit (13) is designed to output the first control signal if a number of readjustment processes carried out corresponds to the maximum permitted number.

7. The thick matter conveying system (10) of claim 6,
wherein the processing unit (12) is designed to determine a maximum permitted number of four readjustment processes if the operating information which is indicative of the angle of inclination of the substructure (30) characterizes an angle of inclination with a value of a maximum of 1° (12) and/or wherein the processing unit is designed to determine a maximum permitted number of three readjustment processes if the operating information which is indicative of the angle of inclination of the substructure (30) characterizes an angle of inclination with a value of a maximum of 2° and/or wherein the processing unit (12) is designed to determine a maximum permitted number of two readjustment processes if the operating information which is indicative of the angle of inclination of the substructure (30) characterizes an angle of inclination with a value of a maximum of 2.5° and/or wherein the processing unit (12) is designed to determine a maximum permitted number of readjustment processes if the operating information which is indicative of the angle of inclination of the substructure (30) characterizes an angle of inclination with a value of a maximum of 3°.

8. The thick matter conveying system (10) of any one of the preceding claims, wherein the receiving unit (11) is designed to receive operating information which is indicative of one of the following properties:
- a joint torque of at least one of the boom arms (41),
- a cylinder force of at least one of the boom arms (41),
- an angle of inclination of at least one boom arm (41),
- an actuator force of at least one actuator of a boom arm (41),
- an operating speed of at least one actuator of a boom arm (41),
- a load weight on a load attachment point of the thick matter distributor boom (18),
- a rotational speed of a slewing gear (19),
- an angle of inclination of the substructure (30),
- a position of the at least one supporting leg (32),
- a horizontal leg force of the at least one supporting leg (32), and
- a vertical leg force of the at least one supporting leg (32).

9. The thick matter conveying system (10) of any one of the preceding claims, the receiving unit (11) further comprising:
- a sensor unit for detecting operating information,
- a communication interface for detecting operating information, or
- a user interface for detecting operating information.

10. The thick matter conveying system (10) of any one of the preceding claims, wherein the substructure (30) is arranged on a vehicle (33).

11. A method (100) for operating a thick matter conveying system (10) comprising a thick matter pump (16) for conveying a thick matter, a thick matter distributor boom (18) for distributing the thick matter to be conveyed, wherein the thick matter distributor boom (18) has a boom arrangement (40) comprising at least two boom arms (41), a substructure (30) on which the thick matter distributor boom (18) and the thick matter pump (16) are arranged, wherein the substructure (30) comprises a supporting structure (31) for supporting the substructure (30) with at least one horizontally and/or vertically movable supporting leg (32), wherein the supporting structure (31) has a stability range with a support readjustment threshold and with an upper limit defined by a maximum stability parameter, and wherein the at least one supporting leg (32) can be readjusted, and comprising a receiving unit (11), a processing unit (12) and a control unit (13), wherein the method comprises the following steps:
- receiving (101), by the receiving unit (11), at least one item of operating information;
- determining (102), by the processing unit (12), a stability parameter of the thick matter conveying system (10) as a function of the at least one item of operating information received; and
- outputting (103), by the control unit (13), a first control signal for suppressing readjustment of the at least one supporting leg (32) if the determined stability parameter of the thick matter conveying system (10) is above the support readjustment threshold.

12. The method (100) of claim 11, the method further comprising the step:
- outputting (104), by the control unit (13), a second control signal if the determined stability parameter is below the support readjustment threshold, wherein the outputting of the second control signal enables the readjustment of the at least one supporting leg (32).

13. The method (100) of any one of claims 11 to 12, the method further comprising the step:
- outputting (105), by the control unit (13), a third control signal if the determined stability parameter is above a switch-off threshold, wherein the output of the third control signal causes a setting of the correct operation of the thick matter boom (18).

## Revendications

1. Système de transport de matière épaisse (10), comprenant
- une pompe à matière épaisse (16) destinée à transporter une matière épaisse,
- un mât de distribution de matière épaisse (18), destiné à distribuer la matière épaisse à transporter, le mât de distribution de matière épaisse (18) présentant un agencement formant mât (40) comprenant au moins deux bras de mât (41),
- une plate-forme (30) sur laquelle sont agencés le mât de distribution de matière épaisse (18) et la pompe à matière épaisse (16), la plate-forme (30) comprenant un système d'étaiement (31) destiné à étayer la plate-forme (30) avec au moins une béquille (32) pouvant être déplacée horizontalement et/ou verticalement, le système d'étaiement (31) présentant une zone de sécurité de stabilité comprenant un seuil de repositionnement et une limite supérieure définie par un paramètre de sécurité de stabilité maximum, et dans lequel une béquille (32) peut être repositionnée,
- une unité de réception (11) destinée à recevoir au moins une information de fonctionnement,
- une unité de traitement (12) destinée à déterminer paramètre de sécurité de stabilité du système de transport de matière épaisse (10) en fonction de ladite au moins une information de fonctionnement reçue,
**caractérisé en ce que**
le système de transport de matière épaisse comprend en outre
- une unité de commande (13) destinée à émettre un premier signal de commande, au cas où le paramètre de sécurité de stabilité déterminé se trouve au-dessus du seuil de repositionnement, l'émission du premier signal de commande empêchant un repositionnement de ladite au moins une béquille (32).

2. Système de transport de matière épaisse (10) selon la revendication 1, dont l'unité de commande (13) est en outre configurée pour émettre un deuxième signal de commande, au cas où le paramètre de sécurité de stabilité déterminé se trouve en dessous du seuil de repositionnement, l'émission du deuxième signal de commande libérant un repositionnement de ladite au moins une béquille (32).

3. Système de transport de matière épaisse (10) selon l'une des revendications précédentes, dont l'unité de commande (13) est en outre configurée pour émettre un troisième signal de commande, au cas où le paramètre de sécurité de stabilité déterminé se trouve au-dessus d'un seuil de coupure, l'émission du troisième signal de commande entraînant un réglage du fonctionnement conforme du mât de distribution de matière épaisse (18).

4. Système de transport de matière épaisse (10) selon l'une des revendications précédentes, dont l'unité de réception (11) est configurée pour recevoir une information de fonctionnement qui indique une position horizontale et/ou verticale de ladite au moins une béquille, et dont l'unité de traitement (12) est configurée pour déterminer le seuil de repositionnement et/ou le seuil de coupure en fonction de l'information de fonctionnement reçue qui indique la position horizontale et/ou verticale de ladite au moins une béquille.

5. Système de transport de matière épaisse (10) selon l'une des revendications précédentes, dans lequel ladite au moins une béquille (32) peut être repositionnée plusieurs fois, au maximum quatre fois.

6. Système de transport de matière épaisse (10) selon la revendication 5, dont l'unité de réception (11) est configurée pour recevoir une information de fonctionnement qui indique un angle d'inclinaison de la plate-forme (30), dont l'unité de traitement (12) est configurée pour déterminer un nombre de repositionnements maximum admissibles, en fonction de l'information de fonctionnement reçue qui indique l'angle d'inclinaison de la plate-forme (30), et dont l'unité de commande (13) est configurée pour émettre le premier signal de commande, au cas où un nombre de repositionnements effectués correspond au nombre maximum admissible.

7. Système de transport de matière épaisse (10) selon la revendication 6, dans lequel l'unité de traitement (12) est configurée pour déterminer un nombre maximum admissible de quatre repositionnements, au cas où l'information de fonctionnement qui indique l'angle d'inclinaison de la plate-forme (30) caractérise un angle d'inclinaison d'une valeur de 1° maximum, et/ou dans lequel l'unité de traitement est configurée pour déterminer un nombre maximum admissible de trois repositionnements, au cas où l'information de fonctionnement qui indique l'angle d'inclinaison de la plate-forme (30) caractérise un angle d'inclinaison d'une valeur de 2° maximum, et/ou dans lequel l'unité de traitement (12) est configurée pour déterminer un nombre maximum admissible de deux repositionnements, au cas où l'information de fonctionnement qui indique l'angle d'inclinaison de la plate-forme (30) caractérise un angle d'inclinaison d'une valeur de 2,5° maximum, et/ou dans lequel l'unité de traitement (12) est configurée pour déterminer un nombre maximum admissible de un repositionnement, au cas où une information de fonctionnement qui indique l'angle d'inclinaison de la plate-forme (30) caractérise un angle d'inclinaison d'une valeur de 3° maximum.

8. Système de transport de matière épaisse (10) selon l'une des revendications précédentes, dont l'unité de réception (11) est configurée pour recevoir une information de fonctionnement qui indique l'une des caractéristiques suivantes :
- un moment d'articulation de l'un au moins des bras de mât (41),
- une force de vérin de l'un au moins des bras de mât (41),
- un angle d'inclinaison d'au moins un bras de mât (41),
- une force d'actionneur d'au moins un actionneur d'un bras de mât (41),
- une vitesse de fonctionnement d'au moins un actionneur d'un bras de mât (41),
- un poids de charge au niveau d'un point de suspension de charge du mât de distribution de matière épaisse (18),
- une vitesse de rotation d'un mécanisme de rotation (19),
- un angle d'inclinaison de la plate-forme (30),
- une position de ladite au moins une béquille (32),
- une force horizontale de ladite au moins une béquille (32), et
- une force verticale de ladite au moins une béquille (32).

9. Système de transport de matière épaisse (10) selon l'une des revendications précédentes, dont l'unité de réception (11) comprend en outre :
- une unité formant capteur destinée à détecter une information de fonctionnement,
- une interface de communication destinée à détecter une information de fonctionnement, ou
- une interface utilisateur destinée à détecter une information de fonctionnement.

10. Système de transport de matière épaisse (10) selon l'une des revendications précédentes, dont la plate-forme (30) est agencée sur un véhicule (33).

11. Procédé (100) de fonctionnement d'un système de transport de matière épaisse (10), comprenant une pompe à matière épaisse (16) destinée à transporter une matière épaisse, un mât de distribution de matière épaisse (18) destiné à distribuer la matière épaisse à transporter, le mât de distribution de matière épaisse (18) présentant un agencement formant mât (40) comprenant au moins deux bras de mât (41), une plate-forme (30) sur laquelle sont agencés le mât de distribution de matière épaisse (18) et la pompe à matière épaisse (16), la plate-forme (30) comprenant un système d'étaiement (31) destiné à étayer la plate-forme (30) avec au moins une béquille (32) pouvant être déplacée horizontalement et/ou verticalement, le système d'étaiement (31) présentant une zone de sécurité de stabilité comprenant un seuil de repositionnement et une limite supérieure définie par un paramètre de sécurité de stabilité maximum, et dans lequel ladite au moins une béquille (32) peut être repositionnée, ainsi qu'une unité de réception (11), une unité de traitement (12) et une unité de commande (13), le procédé comprenant les étapes suivantes consistant à :
- recevoir (101), via l'unité de réception (11), au moins une information de fonctionnement ;
- déterminer (102), via l'unité de traitement (12), un paramètre de sécurité de stabilité du système de transport de matière épaisse (10), en fonction de ladite au moins une information de fonctionnement reçue ; et
- émettre (103), via l'unité de commande (13), un premier signal de commande pour empêcher un repositionnement de ladite au moins une béquille (32), au cas où le paramètre de sécurité de stabilité déterminé du système de transport de matière épaisse (10) se trouve au-dessus du seuil de repositionnement.

12. Procédé (100) selon la revendication 11, le procédé comprenant en outre l'étape consistant à :
- émettre (104), via l'unité de commande (13), un deuxième signal de commande, au cas où le paramètre de sécurité de stabilité déterminé se trouve en dessous du seuil de repositionnement, le signal de commande libérant un repositionnement de ladite au moins une béquille (32).

13. Procédé (100) selon l'une des revendications 11 à 12, le procédé comprenant en outre l'étape consistant à :
- émettre (105), via l'unité de commande (13) un troisième signal de commande, au cas où le paramètre de sécurité de stabilité déterminé se trouve au-dessus d'un seuil de coupure, l'émission du troisième signal de commande entraînant un réglage du fonctionnement conforme du mât de distribution de matière épaisse (18).
